# EUROPEAN PATENT SPECIFICATION

(11) **EP 4 147 908 B1**
(45) Date of publication and mention of the grant of the patent: **09.10.2024**
(21) Application number: 21195442.5
(22) Date of filing: 08.09.2021
(51) Int. Cl.: B60N 3/00

(54) **TABLE ASSEMBLY FOR A TRUCK**
TISCHANORDNUNG FÜR EINEN LASTWAGEN
ENSEMBLE TABLE POUR CAMION

(43) Date of publication of application: 15.03.2023
(73) Proprietor: VOLVO TRUCK CORPORATION, 405 08 Göteborg (SE)
(72) Inventor: ALLIO, Stéphane, 69680 CHASSIEU (FR)
(74) Representative: Lavoix

(56) References cited:
- DE-A1- 102013 222 449
- DE-U1- 29 708 702
- US-A- 1 894 991
- US-A- 2 510 436
- US-A- 2 549 753
- US-A- 688 230

## Description

### Technical Field

This invention relates to a table assembly for equipping a vehicle, in particular a heavy-duty vehicle like a truck.

### Background Art

Aside from the pure driving, the driver of a truck is likely to also perform various activities in his truck, like taking his lunches, resting, doing paperwork or sleeping. The driver may also be accompanied by passengers, who will also carry out their own activities either while the truck is driven or when the truck is parked. It is therefore handy to be able to temporarily arrange various pieces of equipment in the truck cabin, corresponding to the requirements of the moment.

The dashboard of the truck usually offers a storage space with some opened shelves and some closed compartments as well. This storage space is often not sufficient in terms of storage capacity, or not very well suited to the needs of the driver or of the passengers. In particular, the geometry of this storage space cannot usually be modified, or only to a very limited extent. There are various movable table assemblies which are for instance known from DE 10 2013 222449 A1, DE 297 08 702 U1, US 2 549 753 A, US 2 510 436 A, US 1 894 991 A and US 688 230 A.

Consequently, there is a need to propose a device on which various pieces of equipment can be disposed. The device should be adjustable and should be orientable to provide various geometrical configurations. The device should also be easy to dismantle and has to be safe to operate. The installation of the device should not negatively affect the comfort of the cabin. In particular, noise and vibration levels should not be increased once the device is fitted.

### Summary

To this end, the present invention proposes a table assembly according to claim 1.

The two degrees of freedom of pivotal movement provide a good flexibility and numerous possibilities to configurate the table assembly. The table assembly can be adjusted to receive equipment in various situations. Furthermore, both the swing arm and the turntable will remain in position under the mechanical constraints associated with normal driving of the vehicle. Therefore, the proposed table assembly provides a very versatile equipment that can be used by driver and passengers, in driving or non-driving conditions.

The following features can be optionally implemented, separately or in combination one with the others:

Preferably, the first predetermined torque threshold is higher than the second predetermined torque threshold.

For example, the first predetermined torque threshold is comprised between 2,6 N.m and 3,8 N.m.

For example, the second predetermined torque threshold is comprised between 3,8 N.m and 5,8 N.m.

Preferably, the swing arm comprises a first pivot extending about a first axis. When the table assembly is assembled, the first pivot is supported by the support plate.

Preferably, the swing arm comprises a second pivot extending about a second axis. When the table assembly is assembled, the turntable is supported by the second pivot.

Preferably, the swing arm can be moved continuously between the stowed position and the extended position.

Preferably, the swing arm can be moved among a set of discrete stable positions.

Preferably, the turntable can be moved continuously relatively to the swing arm.

Preferably, the turntable can be moved relatively to the swing arm among a set of discrete stable positions.

Preferably, the first pivot extends from a first end of the swing arm.

Preferably, the second pivot extends from a second end of the swing arm.

Preferably, the swing arm is metallic.

Preferably, the swing arm is made of cast aluminum alloy.

Preferably, the length of the swing arm is about 40 centimeters.

Preferably, the width of the swing arm is about 35 millimeters.

Preferably, the length of the turntable is about 42 centimeters.

Preferably, the width of the turntable is about 30 centimeters.

Preferably, an axis of the first pivot of the swing arm makes with a vertical axis an angle comprised between 0° et 15°.

For example, an axis of the first pivot of the swing arm is vertical.

Preferably, an axis of the second pivot of the swing arm makes with the vertical axis an angle comprised between 0° et 15°.

For example, an axis of the second pivot of the swing arm is vertical.

Preferably, the axis of the first pivot is parallel to the axis of the second pivot.

Preferably, the first pivot and the second pivot extend from the swing arm in opposite directions.

Preferably, an angular amplitude of the swing arm between the stowed position and the extended position is comprised between 0° and 90°.

Preferably, an angular amplitude of the turntable relatively to the swing arm is comprised between -40° and 210°.

Preferably, a translation motion of the swing arm relatively to the support plate is blocked when the table assembly is in use position.

Preferably, a translation motion of the turntable relatively to the second pivot of the swing arm is blocked when the table assembly is in use position.

Preferably, the support plate comprises a first locking device configured for holding the swing arm in place relatively to the support plate.

Preferably, the first locking device can be selectively activated and deactivated.

For example, the first locking device comprises a first rotating knob linked to the support plate.

Preferably, the first rotating knob is fixed to a threaded shaft, and the threaded shaft is engaged in a threaded bore of the support plate.

Preferably, the turntable comprises a second locking device configured for holding the turntable in place relatively to the swing arm.

Preferably, the second locking device can be selectively activated and deactivated.

In other words, a swiveling motion of the turntable relatively to the swing arm can be blocked by a second locking device.

Preferably, the second locking device comprises a second rotating knob linked to the turntable.

Preferably, the swing arm comprises a first pivot extending about a first axis and a second pivot extending about a second axis, the swing arm comprises a first portion extending transversely to the first axis and a second portion extending transversely to the second axis, and the first portion and the second portion are offset one from the other along the first axis.

For example, the swing arm comprises a curved portion linking the first portion and second portion.

For example, the curved portion comprises a first curvature directed towards the first pivot and comprises a second curvature directed in opposite direction.

Preferably, the first pivot of the swing arm is cylindrical, the support plate comprises a cylindrical bore, and the first pivot is inserted in the cylindrical bore of the support plate.

Preferably, the second pivot of the swing arm is cylindrical, and the turntable comprises a cylindrical bore, and the second pivot is inserted in the cylindrical bore of the turntable.

Preferably, the first pivot of the swing arm has a toothed crossed section.

For example, the first pivot is inserted in a sleeve fixed in a housing of the support plate.

Preferably, the second pivot has a toothed crossed section.

According to to the invention, the support plate comprises a protection pad, and the swing arm is in contact with the protection pad when the swing arm is in the stowed position.

Preferably, the protection pad comprises a first wing with which a lateral surface of the swing arm is in contact when the swing arm is in the stowed position.

Preferably, the first wing of the protection pad extends in a first plane parallel to the axis of the first pivot.

Preferably, the protection pad comprises a second wing with which a lateral surface of the swing arm is in contact when the swing arm is in the extended position.

The second wing extends in a second plane parallel to the axis of the first pivot.

Preferably, a cross-section of the swing arm has a U shape defining a base and two sides wings.

In an example of implementation, the base of the U-shaped cross-section is perpendicular to the axis of the first pivot. The sides wings of the U-shaped cross-section are parallel to the axis of the first pivot.

Preferably, the axis of the first pivot is located between the side wings.

When the table assembly is installed, the base of the U-shaped cross section is orientated away from the surface of the dashboard.

Preferably, a side wing rests against the first wing of the protection pad when the swing arm is in the stowed position.

Preferably, a side wing rests against the second wing of the protection pad when the swing arm is in the extended position.

Preferably, the protection pad comprises a base extending in a plane perpendicular to the axis of the first pivot, and a bottom surface of the swing arm is in contact with the base when the swing arm is in the stowed position.

Preferably, the protection pad is in polyacetal and polyoxymethylene (POM) material.

Preferably, the protection pad comprises an anti-friction additive.

According to the invention, the swing arm comprises a friction insert configured to slide over the protection pad when the swing arm is rotated from one position between the stowed position and the extended position to the other position.

For example, the friction insert is in polyacetal and polyoxymethylene (POM) material.

Preferably, the friction insert is fixed to swing arm by one or several fixing screws.

Preferably, the turntable comprises a protection mat configured to be in contact with the dashboard when the swing arm is in the stowed position.

The invention also relates to a retrofit kit comprising :
- A table assembly as described earlier,
- a bracket configured to be fixed to a supporting frame of the dashboard,
in which the bracket is configured to receive the support plate of the table assembly.

Preferably, the support plate carries internal mechanical constraints when the support plate of the table assembly is fixed to the bracket.

The invention is also related to a truck comprising a table assembly as described earlier, or comprising a retrofit kit as described above.

### Brief Description of Drawings

Other features, details and advantages will be shown in the following detailed description and on the figures, on which:
- Fig. 1 is a general view of a table assembly according to an embodiment,
- Fig. 2 is a detailed view of a swing arm of the table assembly of figure 1,
- Fig. 3 is a top view of the table assembly implemented in a truck,
- Fig. 4 is a perspective view of the table assembly,

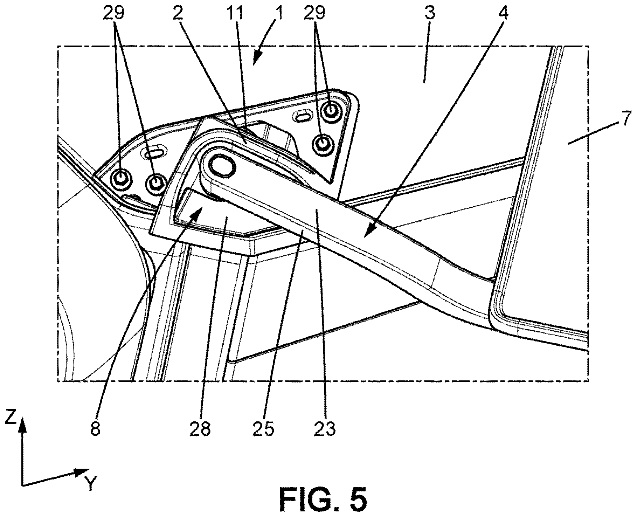

- Fig. 5 is a detailed view of the table assembly of figure 4,
- Fig. 6 is detailed cross sectional view of the table assembly of figure 4,
- Fig. 7 is a detailed view of a swing arm of a table assembly
- Fig. 8 is another detailed cross sectional view of the table assembly of figure 4,
- Fig. 9 is a general view of a truck on which a table assembly according to the invention is installed.

### Description of an Embodiment

In order to make the figures easier to read, the different represented elements are not necessarily drawn to scale. On these figures, identical elements are described by identical reference numbers. Some elements or parameters may be indexed, which means referred to by first or second element, or by first or second parameter. This index system is used only for differentiating elements that are similar, but not identical. This index system does not imply a priority of one element, or parameter, over another one, and the different terms may be exchanged.

When a device or a subsystem comprises a given element, it doesn't exclude the presence of other elements in this device or subsystem.

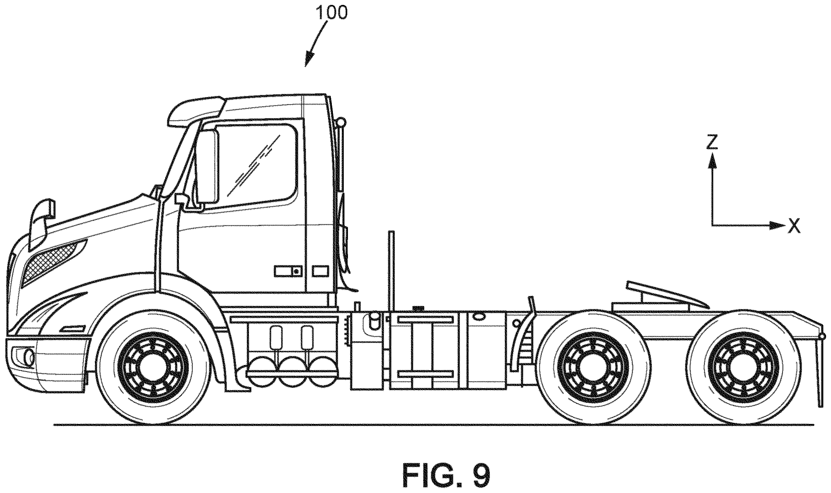

Figure 9 shows a truck 100 comprising a table assembly 1 according to the invention, that will be described in detail here below. The truck 100 is for example a long-haul truck.

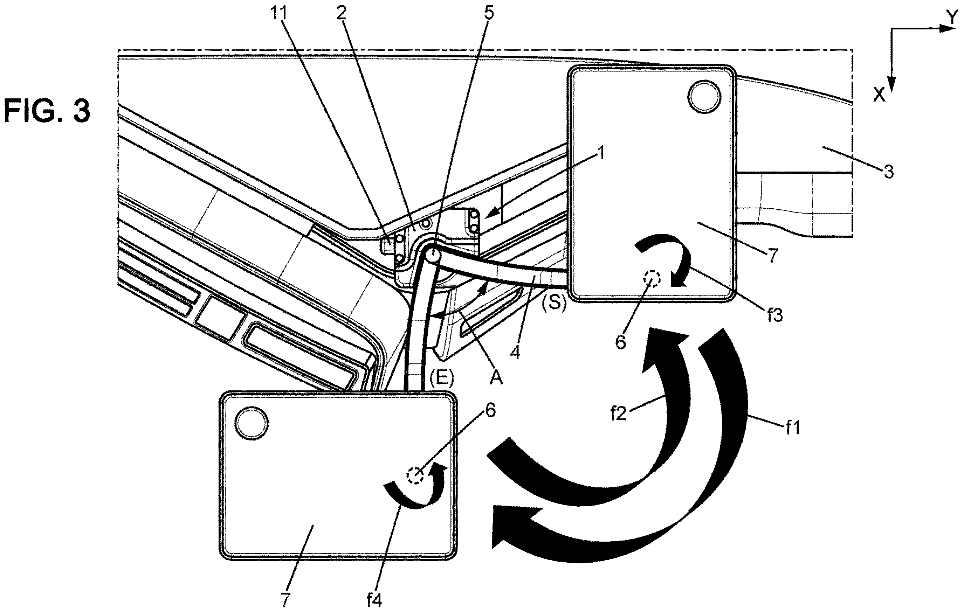

Figure 3 illustrates in a non-limiting manner a table assembly 1 for a truck 100, configured for being moved between a stowed position S and an extended position E, the table assembly 1 comprising :
- a support plate 2 configured to be mounted on a dashboard 3 of the truck 100,
- a swing arm 4 pivotally mounted on the support plate 2 about a first axis Z1,
- a turntable 7 pivotally mounted on the swing arm 4 about a second axis Z2,
in which the swing arm 4 is configured to retain its angular position as long as a torque applied on the swing arm 4 is less than a first predetermined threshold Th1,
and in which the turntable 7 is configured to retain its angular position as long as a torque applied on the turntable 7 is less than a second predetermined threshold Th2.

The two degrees of freedom of pivotal movement provide a good flexibility and numerous possibilities to configurate the table assembly 1. The table assembly 1 can be adjusted to receive equipment in various situations. Furthermore, both the swing arm 4 and the turntable 7 will remain in position under the mechanical constraints associated with normal driving of the vehicle. Therefore, the proposed table assembly 1 provides a very versatile installation that can be used by both driver and passengers, in driving or non-driving conditions. On figure 3, arrow f1 indicates the travel of the table assembly 1 when it is moved from the stowed position S to the extended position E. The arrow f2 indicates the travel of the table assembly 1 when moved the other way round, meaning from the extended position E to the stowed position S. Similarly, arrow f3 indicates a clockwise rotation of the turntable 7, when viewed from the top of the cabin, and arrow f4 indicates an anti-clockwise rotation of the turntable 7. The table assembly 1 is intended to be moved by the effort of a user. For this, the user may exert a force on the swing arm 4, or on the turntable 7, or any protruding element linked to one of the previous elements. The rotation of the swing arm 4 is independent of the rotation of the turntable 7. This means the swing arm 4 can be rotated relatively to the support plate 2 while the turntable 7 remains fixed relatively to the swing arm 4. Similarly, the turntable 7 orientation relatively to the swing arm 4 can be modified while the angular position of the swing arm 4 relatively to the support plate 2 remains constant. Finally, the position of the swing arm 4 relatively to the support plate 2 and the position of the turntable 7 relatively to the swing arm 4 can be simultaneously modified.

The swing arm 4 can be rotated relatively to the support plate 2 only if the torque applied between the swing arm 4 and the support plate 2 exceeds a first predetermined threshold Th1. Thanks to this feature, the swing arm 4 will remain in a fixed position under the mechanical constraints associated with normal driving of the vehicle. These mechanical constraints come for example from the vibrations, small shocks, slopes and camber of the road on which the truck is driven. Different values of the first predetermined threshold Th1 can be obtained through design of internal clearances and materials selection. Similarly, the turntable 7 can be moved relatively to the swing arm 4 only if the torque applied between the turntable 7 and the swing arm 4 exceeds a second predetermined threshold Th2. The turntable 7 will thus also remain in position under mechanical constraints associated with normal driving of the vehicle.

The first predetermined torque threshold Th1 is higher than the second predetermined torque threshold Th2. For example, the first predetermined torque threshold Th1 is comprised between 2,6 N.m and 3,8 N.m. The second predetermined torque threshold Th2 is comprised between 3,8 N.m and 5,8 N.m. With these values of the first predetermined torque threshold Th1 and the second predetermined torque threshold Th2, the table assembly 1 position remains stable with the payload defined, and is still easy to move when a user wants to adjust its configuration.

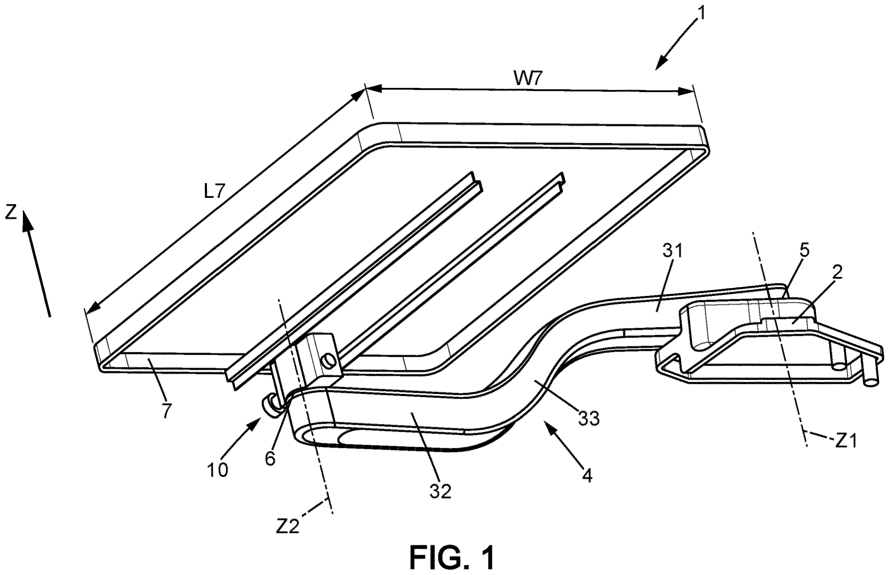

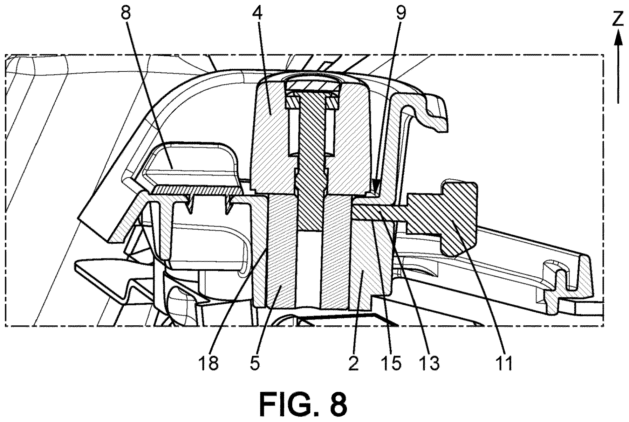

In the embodiment illustrated here, for example on figure 1, the swing arm 4 comprises a first pivot 5 extending about a first axis Z1. When the table assembly is assembled, the first pivot 5 is supported by the support plate 2. Figure 8 shows that the first pivot 5 is inserted in a housing 18 of the support plate 2. The swing arm 4 also comprises a second pivot 6 extending about a second axis Z2. When the table assembly is assembled, the turntable 7 is supported by the second pivot 6.

Preferably, the swing arm 4 can be moved continuously between the stowed position S and the extended position E. In other words, the swing arm 4 can steadily take any angular position comprised between the stowed position S and the extended position E.

According to the illustrated embodiment, the swing arm 4 can be moved among a set of discrete stable positions. In other words, the position of the swing arm 4 can be switched between various discrete positions, and intermediate positions between the discrete positions are only transient positions.

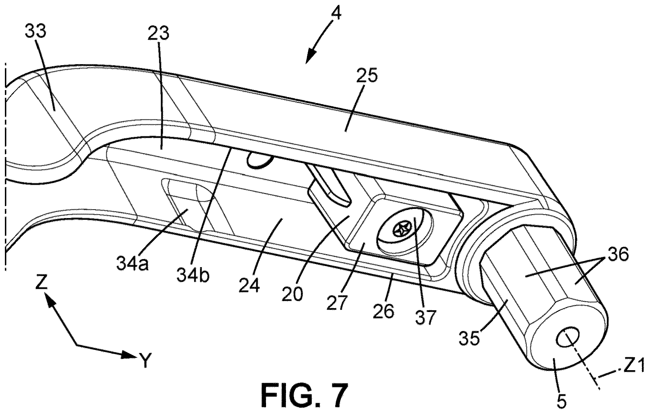

For this, and as illustrated on figure 7, the first pivot 5 of the swing arm 4 has a toothed crossed section. The top 35 of the teeths is further away from the axis Z1 than the gap 36 between the teeths. On this example, the cross section of the pivot 5 is similar to an hexagon with rounded vertices.

The first pivot 5 may be inserted in a sleeve fixed in a housing of the support plate 2. The sleeve has a complementary shape to the toothed cross section of the pivot 5. The material and the dimensions of the sleeve are selected so the torque required to shift the pivot 5 by one tooth relatively to the sleeve is at least equal to the first predetermined threshold Th1.

In a similar way, in the illustrated embodiment the second pivot 6 has a toothed crossed section. This toothed crossed section ensures that the torque required to shift the second pivot 6 by one tooth is at least equal to the second predetermined threshold Th2. The turntable 7 can be moved relatively to the swing arm 4 among a set of discrete stable positions. Intermediate positions between these discrete positions are only transient positions that are occupied during the transition between one stable position and another stable position.

Preferably, the turntable 7 can be moved continuously relatively to the swing arm 4.

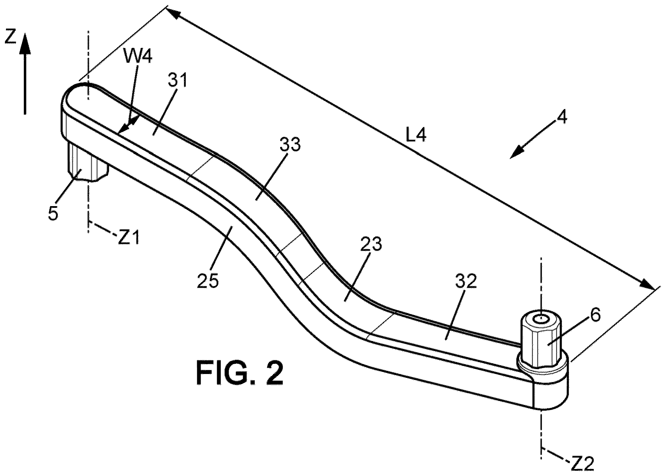

Figure 2 illustrates the swing arm 4 in isolation. The first pivot 5 extends from a first end of the swing arm 4. The second pivot 6 extends from a second end of the swing arm 4. The swing arm 4 has an elongated shape similar to a rod.

The swing arm 4 is metallic. The swing arm 4 is for example made of cast aluminum alloy. Adequate strength and stiffness can thus be provided. Furthermore, a variety of different shapes can easily be obtained.

As illustrated on figure 2, the length L4 of the swing arm 4 is about 40 centimeters. The width W4 of the swing arm 4 is about 35 millimeters.

The first pivot 5 and the second pivot 6 extend from the swing arm 4 in opposite directions. In other words, the first pivot 5 and the second pivot 6 are pointing in opposition directions. The swing arm 4 is axially located, along the direction of extension of the first pivot 5 and the second pivot 6, between the first pivot 5 and the second pivot 6.

Preferably, an axis 1 of the first pivot 5 of the swing arm 4 makes with a vertical axis Z an angle A comprised between 0° et 15°. The axis Z1 of the first pivot 5 of the swing arm 4 is here vertical.

Similarly, an axis Z2 of the second pivot 6 of the swing arm 4 makes with the vertical Z axis an angle comprised between 0° et 15°. The axis Z2 of the second pivot 6 of the swing arm 4 is here vertical. As illustrated for example on figure 1, the axis Z1 of the first pivot 5 is parallel to the axis Z2 of the second pivot 6.

An angular amplitude A of the swing arm 4 between the stowed position S and the extended position E is comprised between 70° and 110°. An angular amplitude of the turntable 7 relatively to the swing arm 4 is comprised between 120° and 210°.

As illustrated on figure 1, the length L7 of the turntable 7 is about 42 centimeters. The width W7 of the turntable 7 is about 30 centimeters. These dimensions are chosen so that the turntable 7 can accommodate the various pieces of equipment that the cabin occupants may need to install.

A translation motion of the swing arm 4 relatively to the support plate 2 is blocked when the table assembly 1 is in use position. Similarly, a translation motion of the turntable 7 relatively to the second pivot 6 of the swing arm 4 is blocked when the table assembly 1 is in use position. In other words, when the table assembly is installed to be used in a nominal way, no vertical translation degree of freedom is provided.

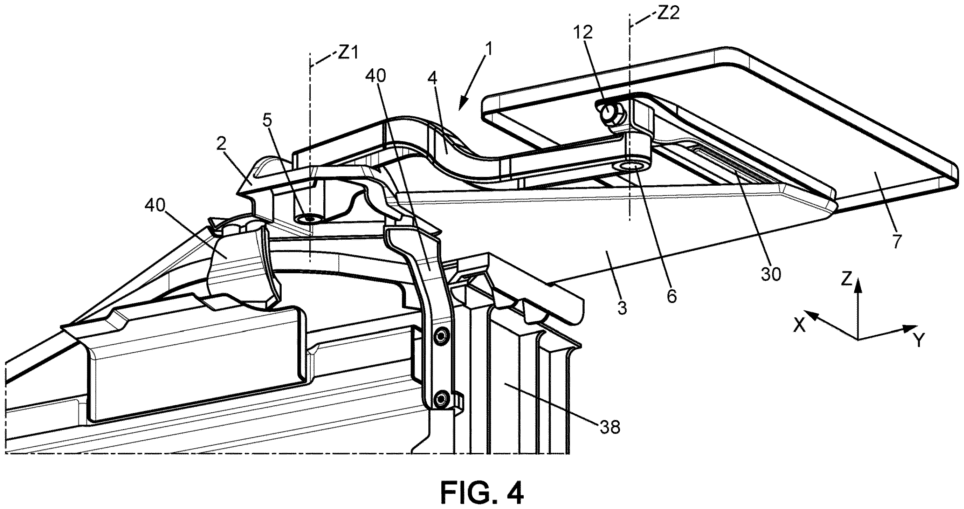

In the stowed position S of the table assembly 1, the turntable 7 is supported by the dashboard 3. In other words, in the stowed position S there's a least a portion of a bottom surface of the turntable 7 which is in contact with the dashboard 3 and thus supported vertically by the dashboard 3. This aspect is best seen on figure 4. In the extended position E, the turntable 7 is overhanging the dashboard 3. In other words, there's no vertical support provided by the dashboard 3 to the bottom surface of the turntable 7. When the table assembly 1 is in extended position E, the turntable 7 may be vertically facing the floor of the cabin of the truck 100.

According to an aspect of the table assembly, the support plate 2 comprises a first locking device 9 configured for holding the swing arm 4 in place relatively to the support plate 2. The first locking device 9 can be selectively activated and deactivated.

The angular position of the swing arm 4 remains constant when the first locking device is activated. The swing arm 4 can be swiveled by a user when the first locking device 9 is deactivated. The position of the swing arm 4 can then by adjusted by the user according to its needs. In other words, a swiveling motion of the swing arm 4 relatively to the support plate 2 can be selectively blocked or released by a first locking device 9.

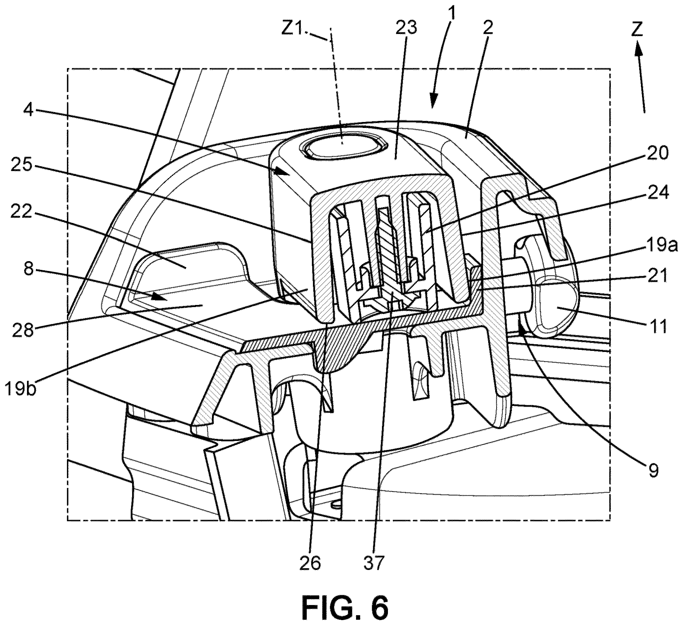

As shown for example on figure 6, the first locking device 9 comprises a first rotating knob 11 linked to the support plate 2. As represented on figure 8, the first rotating knob 11 is fixed to a threaded shaft 13, and the threaded shaft 13 is engaged in a threaded bore 15 of the support plate 2. A rotation of the first rotating knob 11 pushes an axial end of the first threaded shaft 13 against the first pivot 5. The mechanical constraint that is generated prevents a rotation of the swing arm 4 relatively to the support plate 2. Different locking mechanisms can also be considered.

The turntable 7 also comprises a second locking device 10 configured for holding the turntable 7 in place relatively to the swing arm 4. The second locking device 10 can be selectively activated and deactivated. In other words, a swiveling motion of the turntable 7 relatively to the swing arm 4 can be blocked by a second locking device 10.

The angular position of the turntable 7 relatively to the swing arm 4 remains constant when the second locking device 9 is activated. Turntable 7 can be swiveled when the second locking device 10 is deactivated, which allows the position of the turntable 7 to be adjusted as required by the user. In other words, a swiveling motion of the turntable 7 relatively to the swing arm 4 can be selectively blocked or released by a second locking device 10.

In the illustrated example, the second locking device 10 comprises a second rotating knob 12 linked to the turntable 7. The second rotating knob 12 is fixed to a second threaded shaft, and the second threaded shaft is engaged in a threaded bore of the turntable 7. A rotation of the second knob 12 pushes an axial end of the second threaded shaft against the second pivot 6. The mechanical constraint that is generated prevents a rotation of the turntable 7 relatively to the swing arm 4.

When required, the turntable 7 can be disengaged from the swing arm 4. The swing arm 4 can also be mechanically disengaged from the support plate 2. The turntable 7 can be stored when the table assembly 1 is not in use. The sub-assembly comprising the swing arm 4 equipped with the turntable 7 can also be stored when there's no intention to use the table assembly 1. It can for example be stored under the bunk of the cabin. The table assembly 1 can then be easily reassembled so that it comes back in normal use conditions.

As best seen on figure 2, the swing arm 4 comprises a first pivot 5 extending about a first axis Z1 and a second pivot 6 extending about a second axis Z2. The swing arm 4 comprises a first portion 31 extending transversely to the first axis Z1 and a second portion 32 extending transversely to the second axis Z2. The first portion 31 and the second portion 32 are offset one from the other along the first axis Z1. The swing arm 4 comprises a curved portion 33 linking the first portion 31 and second portion 32. The curved portion 33 comprises a first curvature directed towards the first pivot 5 and comprises a second curvature directed in the opposite direction. In other words, the swing arm 4 has a shape similar to a flat 'S'. The offset along the first axis Z1 between the first portion 31 and the second portion 32 is selected so that the top surface of the turntable 7 is aligned, or nearly aligned, with the first portion 31. Furthermore, this offset may compensate the vertical height difference existing between the first portion 31 of the swing arm 4 and the top surface of the dashboard 3. The bottom of the turntable 7 can be more easily supported by the top surface of the dashboard 3, as illustrated on figure 4.

Preferably, the first pivot 5 of the swing arm 4 is cylindrical, the support plate 2 comprises a cylindrical bore, and the first pivot 5 is inserted in the cylindrical bore of the support plate 2. Preferably, the second pivot 6 of the swing arm 4 is cylindrical, and the turntable 7 comprises a cylindrical bore 17, and the second pivot 6 is inserted in the cylindrical bore 17 of the turntable 7.

As illustrated on figure 6, the support plate 2 comprises a protection pad 8, and the swing arm 4 is in contact with the protection pad 8 when the swing arm 4 is in the stowed position S.

More precisely, the protection pad 8 comprises a first wing 21 with which a lateral surface 19a of the swing arm 4 is in contact when the swing arm 4 is in the stowed position S. The first wing 21 of the protection pad 8 extends in a first plane parallel to the axis Z1 of the first pivot 5.

The protection pad 8 also comprises a second wing 22 with which a lateral surface 19b of the swing arm 4 is in contact when the swing arm 4 is in the extended position E. The second wing 22 extends in a second plane parallel to the axis of the first pivot 5. The relative position of the first wing 21 and of the second wing 22 define the amplitude between the stowed position S and the extended position E. The protection pad 8 prevents the swing-arm 4 from wearing and damaging the dashboard 3. Scratches that may result from repeated contacts and impacts of swing arm 3 against dashboard 3 are avoided. The protection pad 8 is for example in polyacetal, or in polyoxymethylene (POM) material.

In the present example, illustrated for example on figure 7, a cross-section of the swing arm 4 has a U shape defining a base 23 and two sides wings 24, 25. The base 23 of the U-shaped cross-section is perpendicular to the axis Z1 of the first pivot 5. The sides wings 24, 25 of the U-shaped cross-section are parallel to the axis Z1 of the first pivot 5. The axis Z1 of the first pivot 5 is located between the side wings 24, 25.

When the table assembly 1 is installed, the base 23 of the U-shaped cross section is orientated away from the surface of the dashboard 3. In other words, the base of the U is facing upwards when the table assembly 1 is installed in the truck 100 and ready for normal use.

When the swing-arm 4 has such a cross section, a side wing 24 rests against the first wing 21 of the protection pad 8 when the swing arm 4 is in the stowed position S. A side wing 25 rests against the second wing 22 of the protection pad 8 when the swing arm 4 is in the extended position E. In other words, the first wing 21 of the protection pad 8 acts as a lateral end-stop for the rotation of the swing arm 4. Similarly, the second wing 22 acts as another end-stop for the rotation of the swing arm 4.

The protection pad 8 comprises a base 28 extending in a plane perpendicular to the axis Z1 of the first pivot 5, and a bottom surface 26 of the swing arm 4 is in contact with the base 28 when the swing arm 4 is in the stowed position S. In other words, a weight acting on the turntable 7 tends to push the swing arm 4 against the base 28 of the protection pad 8. The base 28 can provide a mechanical support to the swing arm 4 in case of deflection because of the weight of the loads put on the turntable 7.

The protection pad 8 also prevents the creation of scratches on the top of the support plate 2, due to the repeated angular strokes of the swing arm 4. Preferably, the protection pad 8 comprises an anti-friction additive.

As represented on figure 6 and figure 7, the swing arm 4 comprises a friction insert 20 configured to slide over the protection pad 8 when the swing arm 4 is rotated from one position between the stowed position S and the extended position E to the other position. A surface 27 of the friction insert 20 may be in contact with the base 28 of the protection pad 8. In other words, the bottom surface 26 of the swing arm 4 contacting the protection pad 8 is provided by the surface 27 of the friction insert 20. In the illustrated example, the friction insert 20 is fixed to swing arm 4 by one or several fixing screws 37. Other fixing solutions are possible, like clipping or over molding of the friction insert 20 on an internal surface of the swing arm 4.

For example, the friction insert 20 is in polyacetal and polyoxymethylene (POM) material. The supporting contact between the swing arm 4 and the dashboard 3 is thus made through materials with good friction properties.

As represented on figure 4, the turntable 7 comprises a protection mat 30 configured to be in contact with the dashboard 3 when the swing arm 4 is in the stowed position S. The protection mat 30 is fixed to a surface of the turntable 7 configured to face the dashboard 3. The protection mat 30 protects the dashboard 3 against possible damages of the dashboard 3 because of the repeated friction of the turntable 7 against the dashboard 3.

Another idea, not according to the present invention, is that the swing arm 4 further comprises a weakened area 34 configured to break when a mechanical constraint exerted on the swing arm 4 is higher than a third predefined threshold Th3. This weakened area is particularly visible on figure 7.

The swing arm 4 has a U-shaped cross section defining a base 23 linking two side wings 24,25, and each side wing 24,25 comprises a weakened area 34a, 34b configured to break when a mechanical constraint exerted on the swing arm 4 is higher than a fourth predefined threshold Th4,Th4'.

In case mechanical constraint applied on the swing arm 4 is too high, like it can be the case when someone accidentally falls over the table assembly, a weakened area 34 of the swing arm 4 is designed to break so that an injury of the falling occupant may be avoided, or at least limited. For this, each side wing 24, 25 of the U-shaped cross section of the swing arm 4 comprises a weakened zone 34a, 34b, ie a zone in which the wall is thinner than the rest of the side wing. Once these weakened zones 34a, 34b are ruptured by an excessive mechanical constraint, only the top section 23 of the swing arm 4 remains. Therefore, the flexion resistance of the swing arm 4 becomes much lower than with the original cross-section, and the swing arm 4 may plastically deflect in a controlled way. The risk of injury for the falling person is eliminated, or at least reduced. The weakened area is designed to resist to the maximum payload recommended for the table assembly, while used according to normal use case. For the same purpose of operational safety, sharp edges are avoided on the external profile of the swing arm 4. A minimum radius is provided between the base 23 and each of the side wings 24, 25.

The weakened area 34a, 34b can be a notch machined in a side wing on the U-shaped cross section of the swing arm 4. Preferably, each side wing 24, 25 of the swing arm 4 comprises a machined notch 34a, 34b. The two notches 34a, 34b may face each other in a direction perpendicular to the main direction Y of the swing arm 4, as it the case on figure 7. The two notches may also be offset along the direction perpendicular to the main direction Y. The weakened area 34 can also be a portion with a lower thickness in the casting. In other words, no machining is performed, and the notch is formed by the shape of the mold.

Although the described table assembly is intended to equip trucks as original equipment, a retrofit kit can be proposed to equip vehicles not originally fitted. Such a retrofit kit comprises :
- A table assembly 1 as described earlier,
- a bracket 40 configured to be fixed to a supporting frame 38 of the dashboard 3,
and the bracket 40 is configured to receive the support plate 2 of the table assembly 1.

As illustrated on figure 4, the bracket 40 is fixed to the supporting frame 38 of the dashboard 3. The support plate 2 is bolted to the bracket 40. The bracket 40 is an intermediate part that makes a mechanical link between the support plate 2 and the supporting frame 38 which is a structural part of the dashboard 3. The supporting frame 38 is able to carry the mechanicals loads generated by the weight and acceleration of the objects disposed on the turntable 7.

On the example illustrated on figure 4, the bracket 40 comprises two different bracket elements fixed to two different locations of the dashboard 3. The bracket elements are sufficiently spaced to resist to the bending moments generated by the loads disposed on the table assy 1.

Preferably, the support plate 2 carries internal mechanical constraints when the support plate 2 of the table assembly 1 is fixed to the bracket 40. In other words, the mechanical assembly of the support plate 2 and the bracket 40 is an hyperstatic assembly. When the bolts 29 of the support plate 2 are tightened, the support plate 2 is not only pressed against the bracket 40, but receives also a bending moment that tends to distort the support plate. The internal constraints that are generated in the support plate 2 when the fixing bolts 29 are tightened limit the propagation of vibrations in the dashboard 3. Rattling noises due to vibrations are eliminated, or at least reduced.

Once the installation is done, the truck 100 comprises a retrofit kit as described above. The installation of the retrofit kit provides the same functions and benefits as those of a truck on which the table assembly 1 is an original equipment.

## Claims

1. A table assembly (1) for a truck (100), configured for being moved between a stowed position (S) and an extended position (E), the table assembly (1) comprising :
- a support plate (2) configured to be mounted on a dashboard (3) of the truck (100),
- a swing arm (4) pivotally mounted on the support plate (2) about a first axis (Z1),
- a turntable (7) pivotally mounted on the swing arm (4) about a second axis (Z2),
in which the swing arm (4) is configured to retain its angular position as long as a torque applied on the swing arm (4) is less than a first predetermined threshold (Th1),
and in which the turntable (7) is configured to retain its angular position as long as a torque applied on the turntable (7) is less than a second predetermined threshold (Th2), **characterized in that** the support plate(2) comprises a protection pad (8), and in which the swing arm (4) is in contact with the protection pad (8) when the swing arm (4) is in the stowed position (S), the swing arm (4) comprises a friction insert (20) configured to slide over the protection pad (8) when the swing arm (4) is rotated from one position between the stowed position (S) and the extended position (E) to the other position.

2. The table assembly (1) according to claim 1, in which the support plate (2) comprises a first locking device (9) configured for holding the swing arm (4) in place relatively to the support plate (2).

3. The table assembly (1) according to claim 1 or 2, in which the turntable (7) comprises a second locking device (10) configured for holding the turntable (7) in place relatively to the swing arm (4).

4. The table assembly (1) according to one of the preceding claims, in which the swing arm (4) comprises a first pivot (5) extending about a first axis (Z1) and a second pivot (6) extending about a second axis (Z2), and in which the swing arm (4) comprises a first portion (31) extending transversely to the first axis (Z1) and a second portion (32) extending transversely to the second axis (Z2), and in which the first portion (31) and the second portion (32) are offset one from the other along the first axis (Z1).

5. The table assembly (1) according to any of the preceding claims, in which the protection pad (8) comprises a first wing (21) with which a lateral surface (19a) of the swing arm (4) is in contact when the swing arm (4) is in the stowed position (S).

6. The table assembly (1) according to any of the preceding claims, in which the protection pad (8) comprises a base (28) extending in a plane perpendicular to the axis of the first pivot (5), in which a bottom surface (26) of the swing arm (4) is in contact with the base (28) when the swing arm (4) is in the stowed position (S).

7. The table assembly (1) according to any of the preceding claims, in which the protection pad (8) is in polyacetal and polyoxymethylene (POM) material.

8. The table assembly (1) according to any of the preceding claims, in which the turntable (7) comprises a protection mat (30) configured to be in contact with the dashboard (3) when the swing arm (4) is in the stowed position (S).

9. A retrofit kit (50) comprising :
- A table assembly (1) according to one of the preceding claims,
- a bracket (40) configured to be fixed to a supporting frame (38) of the dashboard (3),
in which the bracket (40) is configured to receive the support plate (2) of the table assembly (1).

10. A retrofit kit (50) according to the preceding claim, in which the support plate (2) carries internal mechanical constraints when the support plate (2) of the table assembly (1) is fixed to the bracket (40).

11. A truck (100) comprising a table assembly (1) according to any of the claims 1 to 8, or comprising a retrofit kit (50) according to one of claims 9 or 10.

## Patentansprüche

1. Tischanordnung (1) für einen Lastwagen (100), die konfiguriert ist, um zwischen einer verstauten Position (S) und einer ausgefahrenen Position (E) bewegt zu werden, die Tischanordnung (1) umfassend:
- eine Trägerplatte (2), die konfiguriert ist, um auf einem Armaturenbrett (3) des Lastwagens (100) montiert zu werden;
- einen Schwenkarm (4), der schwenkbar um eine erste Achse (Z1) an der Trägerplatte (2) montiert ist,
- einen Drehtisch (7), der schwenkbar um eine zweite Achse (Z2) an dem Schwenkarm (4) montiert ist,
wobei der Schwenkarm (4) konfiguriert ist, um seine Winkelposition beizubehalten, solange ein auf den Schwenkarm (4) ausgeübtes Drehmoment kleiner ist als ein erster vorbestimmter Schwellenwert (Th1),
und wobei der Drehtisch (7) konfiguriert ist, um seine Winkelposition beizubehalten, solange ein auf den Drehtisch (7) ausgeübtes Drehmoment kleiner ist als ein zweiter vorbestimmter Schwellenwert (Th2), **dadurch gekennzeichnet, dass** die Trägerplatte (2) ein Schutzpolster (8) umfasst, und wobei der Schwenkarm (4) in Kontakt mit dem Schutzpolster (8) ist, wenn der Schwenkarm (4) in der verstauten Position (S) ist, wobei der Schwenkarm (4) einen Reibungseinsatz (20) aufweist, der konfiguriert ist, um über das Schutzpolster (8) zu gleiten, wenn der Schwenkarm (4) von einer Position zwischen der verstauten Position (S) und der ausgefahrenen Position (E) in die jeweils andere Position gedreht wird.

2. Tischanordnung (1) nach Anspruch 1, wobei die Trägerplatte (2) eine erste Verriegelungsvorrichtung (9) umfasst, die zum Halten des Schwenkarms (4) in Bezug auf die Trägerplatte (2) konfiguriert ist.

3. Tischanordnung (1) nach Anspruch 1 oder 2, wobei der Drehtisch (7) eine zweite Verriegelungsvorrichtung (10) umfasst, die zum Halten des Drehtellers (7) in Bezug auf den Schwenkarm (4) konfiguriert ist.

4. Tischanordnung (1) nach einem der vorherigen Ansprüche, wobei der Schwenkarm (4) einen ersten Drehpunkt (5), der sich um eine erste Achse (Z1) erstreckt, und einen zweiten Drehpunkt (6), der sich um eine zweite Achse (Z2) erstreckt, aufweist, und wobei der Schwenkarm (4) einen ersten, sich quer zu der ersten Achse (Z1) erstreckenden Abschnitt (31) und einen zweiten, sich quer zu der zweiten Achse (Z2) erstreckenden Abschnitt (32) aufweist, und wobei der erste Abschnitt (31) und der zweite Abschnitt (32) entlang der ersten Achse (Z1) voneinander versetzt sind.

5. Tischanordnung (1) nach einem der vorherigen Ansprüche, wobei das Schutzpolster (8) einen ersten Flügel (21) umfasst, mit dem eine Seitenfläche (19a) des Schwenkarms (4) in Kontakt ist, wenn der Schwenkarm (4) in der verstauten Position (S) ist.

6. Tischanordnung (1) nach einem der vorherigen Ansprüche, wobei das Schutzpolster (8) eine Basis (28) umfasst, die sich in einer Ebene senkrecht zu der Achse des ersten Drehpunkts (5) erstreckt, wobei eine Bodenfläche (26) des Schwenkarms (4) in Kontakt mit der Basis (28) ist, wenn der Schwenkarm (4) in der verstauten Position (S) ist.

7. Tischanordnung (1) nach einem der vorherigen Ansprüche, wobei das Schutzpolster (8) aus Polyacetal und Polyoxymethylen (POM) ist.

8. Tischanordnung (1) nach einem der vorherigen Ansprüche, wobei der Drehtisch (7) eine Schutzmatte (30) aufweist, die konfiguriert ist, um mit dem Armaturenbrett (3) in Kontakt zu sein, wenn der Schwenkarm (4) in der verstauten Position (S) ist.

9. Nachrüstkit (50), umfassend:
- eine Tischanordnung (1) nach einem oder mehreren der vorherigen Ansprüche.
- eine Halterung (40), der konfiguriert ist, um an einem Trägerrahmen (38) des Armaturenbretts (3) befestigt zu werden,
wobei die Halterung (40) konfiguriert ist, um die Trägerplatte (2) der Tischanordnung (1) aufzunehmen.

10. Nachrüstkit (50) nach dem vorherigen Anspruch, wobei die Trägerplatte (2) interne mechanische Begrenzungen trägt, wenn die Trägerplatte (2) der Tischanordnung (1) an der Halterung (40) befestigt ist.

11. Lastwagen (100), umfassend eine Tischanordnung (1) nach einem der Ansprüche 1 bis 8, oder ein Nachrüstkit (50) nach einem der Ansprüche 9 oder 10

## Revendications

1. Assemblage de table (1) pour un camion (100), configuré pour être déplacé entre une position rangée (S) et une position étendue (E), l'ensemble table (1) comprenant :
- une plaque de support (2) configurée pour être montée sur un tableau de bord (3) du camion (100),
- un bras oscillant (4) monté de manière pivotante sur la plaque de support (2) autour d'un premier axe (Z1),
- un plateau tournant (7) monté de manière pivotante sur le bras oscillant (4) autour d'un second axe (Z2),
dans lequel le bras oscillant (4) est configuré pour conserver sa position angulaire tant qu'un couple appliqué sur le bras oscillant (4) est inférieur à un premier seuil prédéterminé (Th1),
et dans lequel le plateau tournant (7) est configuré pour conserver sa position angulaire tant qu'un couple appliqué sur le plateau tournant (7) est inférieur à un second seuil prédéterminé (Th2), **caractérisé en ce que** la plaque de support (2) comprend un tampon de protection (8), et dans lequel le bras pivotant (4) est en contact avec le tampon de protection (8) lorsque le bras pivotant (4) se trouve dans la position rangée (S), le bras pivotant (4) comprend un insert de friction (20) configuré pour glisser sur le tampon de protection (8) lorsque le bras pivotant (4) est tourné d'une position entre la position rangée (S) et la position étendue (E) à l'autre position.

2. Assemblage de table (1) selon la revendication 1, dans lequel la plaque de support (2) comprend un premier dispositif de verrouillage (9) configuré pour maintenir le bras pivotant (4) en place par rapport à la plaque de support (2).

3. Assemblage de table (1) selon la revendication 1 ou 2, dans lequel le plateau tournant (7) comprend un second dispositif de verrouillage (10) configuré pour maintenir le plateau tournant (7) en place par rapport au bras pivotant (4).

4. Assemblage de table (1) selon l'une des revendications précédentes, dans lequel le bras pivotant (4) comprend un premier pivot (5) s'étendant autour d'un premier axe (Z1) et un second pivot (6) s'étendant autour d'un second axe (Z2), et dans lequel le bras oscillant (4) comprend une première partie (31) s'étendant transversalement au premier axe (Z1) et une seconde partie (32) s'étendant transversalement au second axe (Z2), et dans lequel la première partie (31) et la seconde partie (32) sont décalées l'une par rapport à l'autre le long du premier axe (Z1).

5. Assemblage de table (1) selon l'une quelconque des revendications précédentes, dans lequel le tampon de protection (8) comprend une première aile (21) avec laquelle une surface latérale (19a) du bras pivotant (4) est en contact lorsque le bras pivotant (4) se trouve dans la position rangée (S).

6. Assemblage de table (1) selon l'une quelconque des revendications précédentes, dans lequel le tampon de protection (8) comprend une base (28) s'étendant dans un plan perpendiculaire à l'axe du premier pivot (5), dans lequel une surface inférieure (26) du bras pivotant (4) est en contact avec la base (28) lorsque le bras pivotant (4) se trouve dans la position rangée (S).

7. Assemblage de table des revendications précédentes, dans lequel le plateau tournant (7) comprend table (1) selon l'une quelconque des revendications précédentes, dans lequel le tampon de protection (8) est en polyacétal et en polyoxyméthylène (POM).

8. Assemblage de table (1) selon l'une quelconque un tapis de protection (30) configuré pour être en contact avec le tableau de bord (3) lorsque le bras pivotant (4) se trouve dans la position rangée (S).

9. Kit d'adaptation (50) comprenant :
- un ensemble table (1) selon l'une des revendications précédentes,
- un support (40) configuré pour être fixé à un cadre de support (38) du tableau de bord (3),
dans lequel le support (40) est configuré pour recevoir la plaque de support (2) de l'ensemble table (1).

10. Kit d'adaptation (50) selon la revendication précédente, dans lequel la plaque de support (2) porte des contraintes mécaniques internes lorsque la plaque de support (2) de l'ensemble table (1) est fixée au support (40).

11. Camion (100) comprenant un ensemble table (1) selon l'une quelconque des revendications 1 à 8, ou comprenant un kit d'adaptation (50) selon l'une des revendications 9 ou 10.
